# EUROPÄISCHE PATENTSCHRIFT

(11) **EP 1 042 371 B1**
(45) Veröffentlichungstag und Bekanntmachung des Hinweises auf die Patenterteilung: **01.10.2003**
(21) Anmeldenummer: 98965805.9
(22) Anmeldetag: 10.12.1998
(51) Int. Cl.: C08F 4/605, C08F 10/00

(54) **GETRÄGERTES KATALYSATORSYSTEM ZUR POLYMERISATION VON OLEFINEN**
SUPPORTED CATALYST SYSTEM FOR THE POLYMERISATION OF OLEFINS
SYSTEME DE CATALYSEUR SUPPORTE POUR LA POLYMERISATION D'OLEFINES

(30) Priorität: 23.12.1997 DE 19757540
(43) Veröffentlichungstag der Anmeldung: 11.10.2000
(73) Patentinhaber: Basell Polyolefine GmbH, 50389 Wesseling (DE)
(72) Erfinder: FRITZE, Cornelia, D-60529 Frankfurt (DE); BOHNEN, Hans, D-47441 Moers (DE)
(86) Internationale Anmeldenummer: EP9808050
(87) Internationale Veröffentlichungsnummer: WO99033881

(56) Entgegenhaltungen:
- EP-A- 0 727 443
- WO-A-96/04319
- WO-A-96/23005
- WO-A-97/19959

## Beschreibung

Die vorliegende Erfindung betrifft ein geträgertes Katalysatorsystem, erhältlich aus mindestens einem Metallocen, einem Co-Katalysator, einem Träger, einer Lewis-Base und einer Organometallverbindung. Das Katalysatorsystem kann vorteilhaft zur Polymerisation von Olefinen eingesetzt werden. Hierbei wird auf die Verwendung von Aluminoxanen wie Methylaluminoxan (MAO) als Cokatalysator verzichtet und dennoch eine hohe Katalysatoraktivität und gute Polymermorphologie erzielt.

Die Rolle von kationischen Komplexen bei der Ziegler-Natta-Polymerisation mit Metallocenen ist allgemein anerkannt (H.H. Brintzinger, D. Fischer, R. Mülhaupt, R. Rieger, R. Waymouth, Angew. Chem. 1995, 107, 1255-1283).

MAO als wirksamer Co-Katalysator hat den Nachteil, in hohem Überschuß eingesetzt werden zu müssen. Die Darstellung katonischer Alkylkomplexe eröffnet den Weg MAO freier Katalysatoren mit vergleichbarer Aktivität, wobei der Co-Katalysator nahezu stöchiometrisch eingesetzt werden kann.
Die Synthese von "Kationen-ähnlichen" Metallocen-Polymerisationskatalysatoren, wird im J. Am. Chem. Soc. 1991, 113, 3623 beschrieben. Ein Verfahren zur Herstellung von Salzen der allgemeinen Form LMX⁺XA⁻ nach dem oben beschriebenen Prinzip wird in EP 520 732 beansprucht.

EP 558158 beschreibt zwitterionische Katalysatorsysteme, die aus Metallocendialkyl-Verbindungen und Salzen der Form [R₃NH]⁺[B(C₆H₅)₄]⁻ dargestellt werden. Die Umsetzung eines solchen Salzes mit z.B. Cp₂ZrMe₂ liefert durch Protolyse unter Methanabspaltung intermediär ein Zirkonocenmethyl-Kation. Dieses reagiert über C-H-Aktivierung zum Zwitterion Cp₂Zr⁺-(m-C₆H₄)-BPh₃- ab. Das Zr-Atom ist dabei kovalent an ein Kohlenstoffatom des Phenylrings gebunden und wird über agostische Wasserstoffbindungen stabilisiert.

US 5, 348, 299 beschreibt zwitterionische Katalysatorsysteme, die aus Metallocendialkyl-Verbindungen und Salzen der Form [R₃NH]⁺[B(C₆H₅)₄] durch Protolyse dargestellt werden. Die C-H-Aktivierung als Folgereaktion unterbleibt dabei. EP 426 637 beschreibt ein Verfahren in dem das Lewis-saure CPh₃⁺ Kation zur Abstraktion der Methylgruppe vom Metallzentrum eingesetzt wird. Als schwach koordinierendes Anion fungiert ebenfalls B(C₆F₅)₄-.

Für eine industrielle Nutzung von Metallocen-Katalysatoren ist eine Trägerung vorteilhaft, um die Morphologie des resultierenden Polymers zu beeinflussen. Die Trägerung von kationischen Metallocen-Katalysatoren auf Basis von Borat-Anionen ist in WO 91/09882 beschrieben. Dabei wird das Katalysatorsystem durch Aufbringen einer Dialkylmetallocen-Verbindung und einer Brönsted-sauren quartären Ammonium Verbindung mit einem nichtkoordinierenden Anion wie Tetrakispentafluorphenylborat auf einem anorganischen Träger gebildet. Das Trägermaterial wird zuvor mit einer Trialkylaluminium-Verbindung umgesetzt.

Nachteil dieses Trägerungsverfahren ist, daß nur ein geringer Teil des eingesetzten Metallocens durch Physisorption an dem Trägermaterial fixiert ist. Bei der Dosierung des Katalysatorsystems in den Reaktor kann das Metallocen leicht von der Trägeroberfläche abgelöst werden. Dies führt zu einer teilweise homogen verlaufenden Polymerisation, was eine unbefriedigende Morphologie des Polymers zur Folge hat.

In WO 96/04319 wird ein Katalysatorsystem beschrieben, in welchem der Cokatalysator kovalent an das Trägermaterial gebunden ist. Dieses Katalysatorsystem weist jedoch eine geringe Polymerisationsaktivität auf, zudem kann die hohe Empfindlichkeit der geträgerten kationischen Metallocen-Katalysatoren zu Problemen bei der Einschleusung in das Polymerisationssystem führen.

WO 97/19959 offenbart geträgerte Katalysatorsysteme, in denen ionische Aktivatorverbindungen über reaktive Oberflächen-Hydroxylgruppen an ein anorganisches Oxid als Träger gebunden sind.

Die Aufgabe bestand darin ein geträgertes Katalysatorsystem zur Verfügung zu stellen, welches die Nachteile des Standes der Technik vermeidet und trotzdem hohe Polymerisationsaktivitäten und eine gute Polymermorphologie garantiert. Zudem bestand die Aufgabe, ein Verfahren zur Herstellung eines Katalysatorsystems zu entwickeln, das es ermöglicht die Aktivierung des Katalysatorsystems wahlweise vor dem Einschleusen oder aber erst im Polymerisationssystem durchzuführen.

Die vorliegende Erfindung betrifft somit ein geträgertes Katalysatorsystem und ein Verfahren zu dessen Herstellung. Das erfindungsgemäße Katalysatorsystem ist erhältlich durch a) Umsetzung einer Lewis-Base der Formel I und einer Organometallverbindung der Formel II als Cokatalysator mit einem Träger und b) anschließende Umsetzung des in Schritt a) erhaltenen Reaktionsproduktes (modifiziertes Trägermaterial) mit einer Lösung oder Suspension, enthaltend eine Metallocen-Verbindung und mindestens eine Organometall-Verbindung der Formel III, wobei die Organometallverbindung der Formel II kovalent an den Träger gebunden ist.

Die Aktivierung des Metallocens durch Umsetzung mit dem in Schritt a) erhaltenen Reaktionsprodukt kann wahlweise vor dem Einschleusen in den Reaktor vorgenommen werden oder aber erst im Reaktor durchgeführt werden. Ferner wird ein Verfahren zur Herstellung eines Olefinpolymers beschrieben. Die Zugabe eines Additivs, z.B. Antistatikums, welches zum Polymerisationssystem zudosiert wird, kann zusätzlich von Vorteil sein.

Der Träger ist ein poröser anorganischer oder organischer Feststoff. Bevorzugt enthält der Träger mindestens ein anorganisches Oxid, wie Siliziumoxid, Aluminiumoxid, Aluminosilicate, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O oder Li₂O, insbesondere Siliziumoxid und/oder Aluminiumoxid. Der Träger kann auch mindestens ein Polymer enthalten, z.B. ein Homo- oder Copolymer, ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.

Der Träger weist eine spezifische Oberfläche im Bereich von 10 bis 1 000 m²/g, bevorzugt von 150 bis 500 m²/g auf. Die mittlere Partikelgröße des Trägers beträgt 1 bis 500 µm, bevorzugt 5 bis 350 µm.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers kann irregulär oder sphärisch sein. Die Teilchengröße des Trägers kann z. B. durch kryogene Mahlung und/oder Siebung beliebig eingestellt werden.

Die Lewis-Base entspricht der allgemeinen Formel 1, worin

M²R³R⁴R⁵ (I)

R³, R⁴ und R⁵ gleich oder verschieden sind und ein Wasserstoffatom, ein Halogenatom, eine C₁-C₂₀-Alkyl-, C₆-C₄₀-Aryl-, C₇-C₄₀-Alkylaryl- oder C₇-C₄₀-Arylalkyl-Gruppe bedeuten. Außerdem können entweder zwei Reste oder alle drei Reste R³, R⁴ und R⁵ über C₂-C₂₀-Kohlenstoffeinheiten miteinander verbunden sein. M² ist ein Element der V. Hauptgruppe des Periodensystems der Elemente, insbesondere Stickstoff oder Phosphor.

Beispiele für Verbindungen der Formel I sind:
Triethylamin
Triisopropylamin
Triisobutylamin
Tri(n-butyl)amin
N,N-Dimethylanilin
N,N-Diethylanilin
N, N-2,4,6-Pentamethylanilin
Dicyclohexylamin
Pyridin
Pyrazin
Triphenylphosphin
Tri (methylphenyl)phosphin
Tri (dimethylphenyl)phosphin.

Bei den Organometall-Verbindungen der Formel II handelt es sich um starke, neutrale Lewissäuren

M³R⁶R⁷R⁸ (II)

worin
M³ ein Element der III. Hauptgruppe des Periodensystems der Elemente ist, bevorzugt Bor und Aluminium und
R⁶, R⁷ und R⁸ gleich oder verschieden sein kann und ein Wasserstoffatom, ein Halogenatom oder eine C₁-C₄₀-halogenhaltige Gruppe, wie C₁-C₄₀-Halogen-Alkyl-, C₆-C₄₀-Halogen-Aryl-, C₇-C₄₀-Halogen-Alkyl-Aryl- oder C₇-C₄₀-Halogen-Aryl-Alkyl-Gruppe bedeuten, wobei mindestens einer der Reste R⁶, R⁷ und R⁸ eine C₁-C₄₀-halogenhaltige Gruppe ist.
Beispiele für bevorzugte Organometall-Verbindungen der Formel II sind Trispentafluorphenylboran und Trispentafluorphenylalan.
Bei den Organometallverbindungen der Formel III handelt es sich um neutrale Lewissäuren, worin

[M⁴R⁹ ⱼ]ₖ III

M⁴ ein Element der I., II. und III. Hauptgruppe des Periodensystems der Elemente ist. Bevorzugt sind dabei die Elemente Magnesium und Aluminium. Besonders bevorzugt ist Aluminium.
Die Reste R⁹ können gleich oder verschieden sein und sind ein Wasserstoffatom, ein Halogenatom, eine C₁-C₄₀-Kohlenwasserstoff-Gruppe wie eine C₁-C₂₀-Alkyl-, C₆-C₄₀-Aryl-, C₇-C₄₀-Aryl-alkyl oder C₇-C₄₀-Alkyl-aryl-Gruppe.
j ist eine ganze Zahl von 1 bis 3 und k ist eine ganze Zahl von 1 bis 4.

Beispiele für bevorzugte Organometall-Verbindungen der Formel III sind
Trimethylaluminium
Triethylaluminium
Triisopropylaluminium
Trihexylaluminium
Trioctylaluminium
Tri-n-butylaluminium
Tri-n-propylaluminium
Triisoprenaluminium
Dimethylaluminiummonochlorid
Diethylaluminiummonochlorid
Diisobutylaluminiummonochlorid
Methylaluminiumsesquichlorid
Ethylaluminiumsesquichlorid
Dimethylaluminiumhydrid
Diethytaluminiumhydrid
Diisopropylaluminiumhydrid
Dimethylaluminium(trimethylsiloxid)
Dimethylaluminium(triethylsiloxid)
Phenylalan
Pentafluorphenylalan
o-Tolylalan.

Metallocenverbindungen können z.B. verbrückte oder unverbrückte Biscyclopentadienylkomplexe sein, wie sie z.B. in EP 129 368, EP 561 479, EP 545 304 und EP 576 970 beschrieben sind, Monocyclopentadienylkomplexe, wie verbrückte Amidocyclopentadienylkomplexe die z.B. in EP 416 815 beschrieben sind, mehrkernige Cyclopentadienylkomplexe wie in EP 632 063 beschreiben,-Ligand substituierte Tetrahydropentalene wie in EP 659 758 beschrieben oder-Ligand substituierte Tetrahydroindene wie in EP 661 300 beschrieben.

Außerdem können Organometallverbindungen eingesetzt werden, in denen der komplexierende Ligand kein Cyclopentadienyl-Liganden enthält. Beispiele hierfür sind Diamin-Komplexe der III. und IV. Nebengruppe des Periodensystems der Elemente, wie sie z.B. bei D.H. McConville, et al., Macromolecules, 1996, 29, 5241 und D.H. McConville, et al., J. Am. Chem. So., 1996, 118, 10008 beschrieben werden. Außerdem können Diimin-Komplexe der VIII. Nebengruppe des Periodensystems der Elemente (z.B. Ni²⁺ oder Pd²⁺ Komplexe), wie sie bei Brookhart et al., J. Am. Chem. So. 1995, 117, 6414 und, Brookhart et al., J. Am. Chem. So., 1996, 118, 267 beschrieben werden, eingesetzt weden. Ferner lassen sich 2,6-bis(imino)pyridyl-Komplexe der VIII. Nebengruppe des Periodensystems der Elemente (z.B. Co²⁺ oder Fe²⁺ Komplexe), wie sie bei Brookhart et al., J. Am. Chem. So. 1998, 120, 4049 und Gibson et al., Chem. Commun. 1998, 849 beschrieben werden, einsetzen.

Die Metallocenverbindungen sind verbrückte Verbindungen der Formel IV, 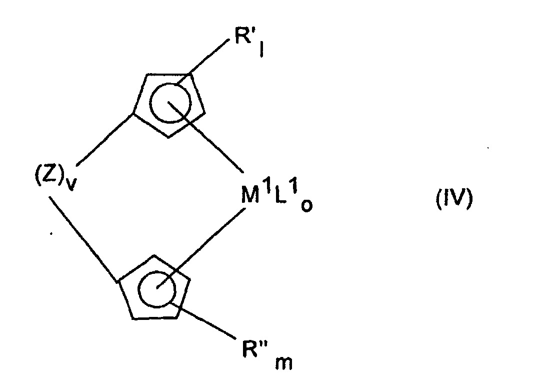 worin
- M¹: ein Metall der III., IV., V. oder VI. Nebengruppe des Periodensystems der Elemente ist, insbesondere Ti, Zr oder Hf,
- R': gleich oder verschieden sind und ein Wasserstoffatom oder SiR^{x}₃ sind, worin R^{x} gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxyl C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R' sind eine C₁-C₃₀-kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R' können so miteinander verbunden sein, daß die Reste R' und die sie verbindenden Atome des Cyclopentadienylringes ein C₄-C₂₄-Ringsystem bilden, welches seinerseits substituiert sein kann,
- R": gleich oder verschieden sind und ein Wasserstoffatom oder SiR ^{x}₃ sind, worin R^{x} gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R" sind eine C₁-C₃₀-kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R" können so miteinander verbunden sein, daß die Reste R" und die sie verbindenden Atome des Cyclopentadienylringes ein C₄-C₂₄-Ringsystem bilden, welches seinerseits substituiert sein kann,
- l: gleich 4 ist,
- m: gleich 4 ist,
- L¹: gleich oder verschieden sein können und ein Wasserstoffatom, ein Halogenatom, oder OR^{y}, SR^{y}, OSiR^{y}₃, SiR^{y}₃, PR^{y}₂ oder NR^{y}₂ bedeuten, worin R^{y} ein Halogenatom, eine C₁-C₁₀ Alkylgruppe, eine halogenierte C₁-C₁₀-Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und
- v: ist 1.

Beispiele für Z sind Gruppen M²R^{Z}R^{Z}=, worin M² Kohlenstoff, Silizium, Germanium oder Zinn ist und R^{Z} und R^{z=} gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge. (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R' und/oder R" ein mono- oder polycyclisches Ringsystem bilden.

Bevorzugt sind chirale verbrückte Metallocenverbindungen der Formel IV, insbesondere solche in denen einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiylbis(2-methyl-4,5-benzo-indenyl)zirkoniumdichlorid
Dimethylsilandiylbis(2-methyl-4,6 diisopropyl-indenyl)zirkoniumdichlorid
Dimethyisilandiylbis(2-methyl-4,5 diisopropyl-indenyl)zirkoniumdichlorid
Dimethylsjlandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichiorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdichlorid
Methyl(phenyl)silandiylbis(2-methyl-4,5-(tetramethylbenzo)-indenyl)zirkoniumdichlorid
Methyl(phenyl)silandiylbis(2-methyl-4-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4-(η⁵-3'-isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)4,7,7-trimethyl-(η⁵-4,5,6,7-tetrahydroindenyl)]-dichlorohafnium
[4-(η⁵-3'-tert.Butyl-cyclopentadienyl)4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyl-dichlorotitan
(Tertbutylamido)-(tetramethyl-η⁵-cyclopentadienyl)-1,2-ethandiyl-dichlorotitan-dichlorotitan
(Methylamido)-(tetramethyl-η⁵-cyclopentadienyl)-dimethylsilyl-dichlorotitan
(Methylamido)-(tetramethyl-η⁵-cyclopentadienyl)-1,2-ethandiyl-dichlorotitan
(Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1 H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiybis(2-methyl-4,5-benzo-indenyl)zirkoniumdimethyl
Dimethylsilandiylbis(2-methyl-4,6 diisopropyl-indenyl)zirkoniumdimethyl
Dimethylsilandiylbis(2-methyl-4,5 diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Methyl(phenyl)silandiylbis(2-methyl-4-phenyl-indenyl)zirkoniumdimethyl
Methyl(phenyl)silandiylbis(2-methyl-4,6 diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)-indenyl)zirkoniumdi-methyl
Methyl(phenyl)silandiylbis(2-methyl-4,5-(tetramethylbenzo)-indenyl)zirkoniumdimethyl
Methyl(phenyl)silandiylbis(2-methyl-4-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6 diisopropyl-indenyl)zirkoniumdimethyl
1,4-Butandiylbis(2-methyl-4-isopropyl-indenyl)zirkoniumdimethyl
1 ,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethy(-indenyl)zirkoniumdimethyl
1,2-Ethandiylbis(2-methyl-indenyl)zirkoniumdimethyl
1,4-Butandiylbis(2-methyl-indenyl)zirkomumdimethyl
[4-(η⁵-Cyclopentadienyl)4,6,6-trimethyl-(η⁵-4,5-tetrahydropentalen)]-dimethylzirconium
[4-(η⁵-3'-Trimethylsilyl-cyclopentadienyl)-4,6,6-trimethyl-(η⁵-4,5-tetrahydropentalen)]-dimethylzirconium
[4-(η⁵-3'-Isopropyl-cyclopentadienyl)-4,6,6-trimethyl-(η⁵-4,5-tetrahydropentalen)]-dimethylzirconium
[4-(η⁵-Cyclopentadienyl)-4,7,7-trimethyl-(η⁵-4,5,6,7-tetrahydroindenyl)]-dimethyltitan
[4-(η⁵-Cyclopentadienyl)-4,7,7-trimethyl-(η⁵-4,5,6,7-tetrahydroindenyl)]-dimethylzirkonium
[4-(η⁵-Cyclopentadienyl)-4,7,7-trimethyl-(η⁵-4,5,6,7-tetrahydroindenyl)]-dimethylhafnium
[4-(η⁵-3'-tert.Butyl-cyclopentadienyl)-4,7,7-trimethyl-(η⁵-4,5,6,7-tetrahydroindenyl)]-dimethyltitan
4-(η⁵-3'-Isopropylcyclopentadienyl)-4,7,7-trimethyl-(η⁵-4,5,6,7-tetrahydroindenyl)]-dimethyltitan
Dimethylsilandiylbis(2-methyl-4-(4-tert-butyl-phenyl-indenyl)zirkoniumdichlorid
Dimethylsilandiylbis(2-methyl-4-(4-methyl-phenyl-indenyl)zirkoniumdichlorid
Dimethylsilandiylbis(2-methyl-4-(4-ethyl-phenyl-indenyl)zirkoniumdichlorid
Dimethylsilandiylbis(2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis(2-ethyl-4-(4-ethyl-phenyl-indenyl)zirkoniumdichlorid
Dimethyisilandiylbis(2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluormethyl-phenyl-indenyl)zirkoniumdimethyl
Dimethylsilandiylbis(2-methyl-4-(4-methoxy-phenyl-indenyl)zirkoniumdimethyl
Dimethylsilandiylbis(2-ethyl-4-(4-tert-butyl-phenyl-indenyl)zirkoniumdimethyl
Dimethylsilandiylbis(2-ethyl-4-(4-methyl-phenyl-indenyl)zirkoniumdimethyl
Dimethylsilandiylbis(2-ethyl-4-(4-ethyl-phenyl-indenyl)zirkoniumdimethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-n-propyl-phenyl)-indenyl)zirkoniumdichlorid
Dimethylsilandiylbis(2-methyl-4-(4'-iso-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethyisilandiylbis(2-methyl-4-(4'-sec-butyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-iso-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethyisilandlylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-n-propyl-4-phenyl)-indenyl)zirkoniumdichlorid
Dimethylsilanddiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-n-propyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexy(-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4-phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid

Weiterhin bevorzugt sind die entsprechenden Zirkondimethyl-Verbindungen und die entsprechenden Zirkon-η⁴-Butadien-Verbindungen, sowie die entsprechenden Verbindungen mit 1,2-(1-methyl-ethandiyl)-,1,2-(1,1-dimethyl-ethandiyl)- und 1,2-(1,2-dimethyl-ethandiyl)-Brücke.

Zur Herstellung des erfindungsgemäßen Katalysatorsystems wird das Trägermaterial in einem organischen Lösemittel suspendiert. Geeignete Lösemittel sind aromatische oder aliphatische Lösemittel, wie beispielsweise Hexan, Heptan, Dodecan, Toluol oder Xylol oder halogenierte Kohlenwasserstoffe, wie Methylenchlorid oder halogenierte aromatische Kohlenwasserstoffe, wie o-Dichlorbenzol. Der Träger kann zuvor mit einer Organometall-Verbindung der Formel III vorbehandelt werden. Anschließend wird eine oder mehrere Lewis-Basen der Formel I zu dieser Suspension gegeben, wobei die Reaktionszeit zwischen 1 Minute und 48 Stunden liegen kann, bevorzugt ist eine Reaktionszeit von 10 Minuten und 2 Stunden. Die Reaktionslösung kann isoliert und anschließend resuspendiert werden oder aber auch direkt weiter mit einer Organometall-Verbindung der Formel II umgesetzt werden. Die Reaktionszeit liegt zwischen 1 Minute und 48 Stunden, bevorzugt ist eine Reaktionszeit von 10 Minuten und 2 Stunden. Zur Herstellung des erfindungsgemäßen Katalysatorsystems kann die eine oder können mehrere Lewis-Basen der Formel I in jedem beliebigen stöchiometrischen Verhältnis mit einer oder mehreren Organometall-Verbindungen der Formel II umgesetzt werden. Bevorzugt ist die Menge von 1 bis 4 Äquivalenten einer Lewis-Base der Formel I mit einem äquivalent einer Organometall-Verbindung der Formel II. Besonders bevorzugt ist die Menge von einem Äquivalent einer Lewis-Base der Formel I mit einem Äquivalent einer Organometall-Verbindung der Formel II. Das Reaktionsprodukt dieser Umsetzung ist eine metalloceniumbildende Verbindung, die kovalent an das Trägermaterial fixiert ist. Es wird nachfolgend als modifiziertes Trägermaterial bezeichnet. Die Reaktionslösung wird anschließend filtriert und mit einem der oben genannten Lösemittel gewaschen. Danach wird das modifizierte Trägermaterial im Vakuum getrocknet.

Die Umsetzung der Mischung einer oder mehrerer Metallocenverbindungen der Formel IV und einer oder mehrerer Organometallverbindungen der Formel III mit dem modifizierten Trägermaterial geht vorzugsweise so vonstatten, daß eine oder mehrere Metallocenverbindung der Formel IV in einem oben beschriebenen Lösemittel gelöst bzw. suspendiert wird und anschließend eine oder mehrere Organometall-Verbindungen der Formel III, die vorzugsweise ebenfalls gelöst bzw. suspendiert ist, umgesetzt werden. Das stöchiometrische Verhältnis an Metallocenverbindung der Formel IV und einer Organometallverbindung der Formel III beträgt 100 1 bis 10⁻⁴: 1. Vorzugsweise beträgt das Verhältnis 1:1 bis 10⁻²:1.

Das modifizierte Trägermaterial kann entweder direkt im Polymerisationsreaktor oder vor der Zugabe zum Polymerisationsreaktor in einem Reaktionsgefäß mit einer Mischung aus einer Metallocenverbindung der Formel IV und einer Organometallverbindung der Formel III umgesetzt werden. Die Zugabe einer Organometallverbindung der Formel III hat einen positiven Einflu8 auf die Aktivität des Katalysatorsystems. Polymerisationskatalysatoren bestehend aus einem wie oben beschriebenen modifizierten Trägermaterial und einer Metallocenverbindung z.B. der Formel IV zeigen deutlich niedrigere Aktivitäten verglichen mit dem erfindungsgemäßen Katalysatorsystem, das eine Mischung aus dem oben beschriebenen modifizierten Trägermaterial, einer Metallocenverbindung der Formel IV und einer Organometallverbindung der Formel III enthält.
Die Menge an modifiziertem Träger zu einer Metallocenverbindung der Formel IV beträgt vorzugsweise 10 g : 1 µmol bis 10⁻³: 1 µmol. Das stöchiometrische Verhältnis an Metallocenverbindung der Formel IV zu der auf dem Träger fixierten Organometallverbindung der Formel II beträgt 100: 1 bis 10⁻⁴ : 1, vorzugsweise 1: 1 bis 10⁻²: 1.

Das geträgerte Katalysatorsystem kann direkt zur Polymerisation eingesetzt werden. Es kann aber auch nach Entfernen des Lösemittels resuspendiert zur Polymerisation eingesetzt werden. Der Vorteil dieser Aktivierungsmethode liegt darin, daß es die Option bietet, das polymerisationsaktive Katalysatorsystem erst im Reaktor entstehen zu lassen. Dadurch wird verhindert, daß beim Einschleusen des luftempfindlichen Katalysators zum Teil Zersetzung eintritt.

Weiterhin wird ein Verfahren zur Herstellung eines Olefinpolymers durch Polymerisation eines oder mehrerer Olefine, in Gegenwart des erfindungsgemäßen Katalysatorsystems beschrieben. Die Polymerisation kann eine Homo- oder eine Copolymerisation sein.

Bevorzugt werden Olefine der Formel R^{α}-CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure-oder Carbonsäureestergruppe substituiert sein kann, oder R^{α} und R^{β} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester.

Insbesondere werden Propylen oder Ethylen homopolymerisiert, Ethylen mit einem oder mehreren C₃-C₂₀-1-Olefinen, insbesondere Propylen, und /oder einem oder mehreren C₄-C₂₀-Diene, insbesondere 1,3-Butadien, copolymerisiert oder Norbornen und Ethylen copolymerisiert.
Die Polymerisation wird bevorzugt bei einer Temperatur von - 60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.
Das geträgerte Katalysatorsystem kann entweder direkt im Polymerisationssystem gebildet werden oder es kann als Pulver oder noch Lösemittel behaftet wieder resuspendiert und als Suspension in einem inerten Suspensionsmittel in das Polymerisationssystem eindosiert werden.

Zur Herstellung von Olefinpolymeren mit breiter Molekulargewichtsverteilung werden bevorzugt Katalysatorsysteme verwendet, die zwei oder mehr verschiedene Übergangsmetallverbindungen, z. B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des erfindungsgemäßen Katalysatorsystems kann zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol AI pro kg Reaktorinhalt dem Polymerisationssystem zugesetzt.
Bevorzugt werden Triisobutylaluminium und Triethylaluminium in einer Konzentration von 200 bis 0,001 mmol AI pro kg Reaktorinhalt eingesetzt. Dadurch kann bei der Synthese eines geträgerten Katalysatorsystems das molare Al/M-Verhältnis klein gewählt werden.

Weiterhin kann bei dem erfindungsgemäßen Verfahren ein Additiv wie ein Antistatikum verwendet werden z.B. zur Verbesserung der Kornmorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3543360 beschrieben werden. Weitere geeignete Antistatika sind z.B. C₁₂- bis C₂₂-Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A 107127 angegeben.

Außerdem kann als Antistatikum eine Mischung aus einem Metallsalz der Medialansäure, einem Metallsalz der Anthranilsäure und einem Polyamin eingesetzt werden, wie in EP-A 636636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und ATMER® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel IV) eingesetzt. Die benötigten Mengen an Antistatikum können jedoch, je nach Art des eingesetzten Antistatikums, in weiten Bereichen schwanken.
Die eigentliche Polymerisation wird vorzugsweise in flüssigen Monomer (bulk) oder in der Gasphase durchgeführt.

Das Antistatikum kann zu jedem beliebigen Zeitpunkt zur Polymerisation zudosiert werden. Zum Beispiel ist eine bevorzugte Verfahrensweise die, daß das geträgerte Katalysatorsystem in einem organischen Lösemittel, bevorzugt Alkane wie Heptan oder Isododekan, resuspendiert wird. Anschließend wird es unter Rühren in den Polymerisationsautoklav zugegeben. Danach wird das Antistatikum zudosiert. Die Polymerisation wird bei Temperaturen im Bereich von 0 bis 100°C durchgeführt. Eine weitere bevorzugte Verfahrensweise ist, daß das Antistatikum vor Zugabe des geträgerten Katalysatorsystems in den Polymerisationsautoklav zudosiert wird. Anschließend wird das resuspendierte geträgerte Katalysatorsystem unter Rühren bei Temperaturen im Bereich von 0 bis 100/C zudosiert. Die Polymerisationszeit kann im Bereich von 00.1 bis 24 Stunden. Bevorzugt ist eine Polymerisationszeit im Bereich von 0.1 bis 5 Stunden.

Bei dem erfindungsgemäßen Verfahren treten keine Reaktorbeläge auf, es bilden sich keine Agglomerate und die Produktivität des eingesetzten Katalysatorsystems ist hoch. Die mit dem erfindungsgemäßen Verfahren hergestellten Polymere zeichnen sich durch eine enge Molekulargewichtsverteilung und gute Kornmorphologie aus.

Die nachfolgenden Beispiele dienen zur näheren Erläuterung der Erfindung haben jedoch keinen limitierenden Charakter.

### Beispiel 1

### Darstellung modifizierter Träger

5 g SiO₂ (PQ MS 3030, vorbehandelt bei 140°C, 10 mbar, 10 h) wurden in 30 ml Toluol suspendiert. Dazu wurden 0,25 ml N,N-Dimethylanilin gegeben und die Reaktionsmischung 1 h gerührt. Danach wurde die Reaktionsmischung mit 1,02 g Tris(pentafluorophenyl)boran versetzt und eine Stunde gerührt. Die Reaktionsmischung wurde filtriert und dreimal mit Toluol gewaschen.
Lösemittelreste wurden vom Rückstand im Ölpumpenvakuum entfernt.

### Beispiel 2

### Darstellung des Katalysators A

In 3 ml Toluol wurden 8,3 mg Dimethylsilylenbis(2-methylindenyl)zirkoniumdimethyl gelöst und mit 1 ml 20%iger Trimethylaluminiumlösung in Varsol versetzt. Dazu gab man 1 g des modifizierten Trägers, rührte eine Stunde und entfernte Lösemittelreste im Ölpumpenvakuum. Man erhielt 1,15 g eines freifließenden geträgerten Katalysators.

### Beispiel 3

Polymerisation von Propen

Ein trockener 16-dm³⁻Reaktor wurde zunächst mit Stickstoff und anschließend mit Propylen gespült und mit 10 dm³ flüssigem Propylen befüllt.
Dann wurden 4 cm³ einer 20 %igen Triisobutylaluminiumlösung in Varsol mit 30 cm³ Heptan verdünnt in den Reaktor gegeben und der Ansatz bei 30°C 15 Minuten gerührt.
Anschließend wurde der Katalysator aus Beispiel 2 in Heptan resuspendiert und diese Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet.

Es resultieren 1,1 kg Polypropylen-Pulver. Der Reaktor zeigte keine Beläge an Innenwand oder Rührer. Die Katalysatoraktivität betrug 132 kg PP/g Metallocen x h.

### Beispiel 4

### Darstellung des Katalysators B

3 ml Toluol wurden 8,3 mg Dimethylsilylenbis(2-methylindenyl)zirkoniumdimethyl.

Dazu gab man 1 g des modifizierten Trägers, rührte eine Stunde und entfernte Lösemittelreste im Ölpumpenvakuum. Man erhielt 1,05 g eines freifließenden geträgerten Katalysators.

### Beispiel 5

### Polymerisation von Propen

Ein trockener 16-dm³ -Reaktor wurde zunächst mit Stickstoff und anschließend mit Propylen gespült und mit 10 dm³ flüssigem Propylen befüllt.

Dann wurden 4 cm³ einer 20 %igen Triisobutylaluminiumlösung in Varsol mit 30 cm³ Heptan verdünnt in den Reaktor gegeben und der Ansatz bei 30°C 15 Minuten gerührt.
Anschließend wurde der Katalysator aus Beispiel 4 in Heptan resuspendiert und diese Suspension in den Reaktor gegeben. Das Reaktionsgemisch wurde auf die Polymerisationstemperatur von 65°C aufgeheizt (40°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet.

Es resultieren 0,33 kg Polypropylen-Pulver, Der Reaktor zeigte keine Beläge an Innenwand oder Rührer. Die Katalysatoraktivität betrug 40 kg PP/g Metallocen x h.

### Beispiel 6

### Darstellung des Katalysators C

3 ml Toluol wurden 9,1 mg Dimethylsilylenbis(2-methylindenyl)zirkoniumdichlorid gelöst und mit 1 ml 20%iger Trimethylaluminiumlösung in Varsol versetzt. Dazu gab man 1 g des modifizierten Trägers, rührte eine Stunde und entfernte Lösemittelreste im Ölpumpenvakuum. Man erhielt 1,16 g eines freifließenden geträgerten Katalysators.

### Beispiel 7

### Polymerisation von Propen

Ein trockener 16-dm³⁻Reaktor wurde zunächst mit Stickstoff und anschließend mit Propylen gespült und mit 10 dm³ flüssigem Propylen befüllt.

Dann wurden 4 cm³ einer 20 %igen Triisobutylaluminiumlösung in Varsol mit 30 cm³ Heptan verdünnt in den Reaktor gegeben und der Ansatz bei 30°C 15 Minuten gerührt. Anschließend wurde der Katalysator aus Beispiel 6 in Heptan resuspendiert und diese Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Das Polymer wurde im Vakuumtrockenschrank getrocknet.

Es resultieren 1,0 kg Polypropylen-Pulver. Der Reaktor zeigte keine Beläge an Innenwand oder Rührer. Die Katalysatoraktivität betrug 118 kg PP/g Metallocen x h.

## Patentansprüche

1. Geträgertes Katalysatorsystem, erhältlich durch
a) Umsetzung einer Lewis-Base der Formel I, worin
M²R³R⁴R⁵ (I)
R³, R⁴ und R⁵ gleich oder verschieden sind und ein Wasserstoffatom, ein Halogenatom, eine C₁-C₂₀-Alkyl-, C₆-C₄₀-Aryl-, C₇-C₄₀-Alkylaryl- oder C₇-C₄₀-Arylalkyl-Gruppen bedeutet und/oder zwei Reste oder alle drei Reste R³, R⁴ und R⁵ über C₂-C₂₀-Kohlenstoffeinheiten miteinander verbunden sind und M² ein Element der V. Hauptgruppe des Periodensystems der Elemente ist und einer Organometallverbindung der Formel II
M³R⁶R⁷R⁸ (II)
worin
M³ ein Element der III. Hauptgruppe des Periodensystems der Elemente ist, und
R⁶, R⁷ und R⁸ gleich oder verschieden sind und ein Wasserstoffatom, ein Halogenatom oder eine C₁-C₄₀-halogenhaltige Gruppe bedeutet, wobei mindestens einer der Reste R⁶, R⁷ und R⁸ eine C₁-C₄₀-halogenhaltige Gruppe ist, mit einem Träger und
b) anschließende Umsetzung mit einer Lösung oder Suspension enthaltend eine Metallocen-Verbindung der Formel IV 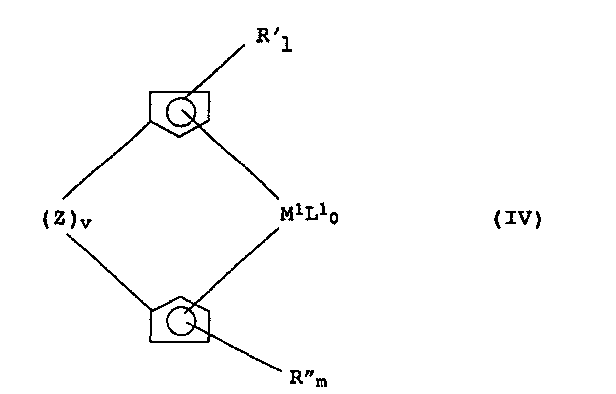
worin
M¹ ein Metall der III., IV., V. oder VI. Nebengruppe des Periodensystems der Elemente ist,
R' gleich oder verschieden sind und ein Wasserstoffatom oder SiR^{X}₃ sind, worin R^{x} gleich oder verschieden ein Wasserstoffatom oder eine C₁-C₄₀-kohlenstoffhaltige Gruppe sind, oder R' sind eine C₁-C₃₀-kohlenstoffhaltige Gruppe oder zwei oder mehrere Reste R' können so miteinander verbunden sein, daß die Reste R' und die sie verbindenden Atome des Cyclopentadienylringes ein C₄-C₂₄-Ringsystem bilden, welches seinerseits substituiert sein kann,
R" gleich oder verschieden sind und ein Wasserstoffatom oder siR^{x}₃ sind, worin R^{x} gleich oder verschieden ein Wasserstoffatom oder eine C₁-C₄₀-kohlenstoffhaltige Gruppe sind oder R" sind eine C₁-C₃₀-kohlenstoffhaltige Gruppe oder zwei oder mehrere Reste R" können so miteinander verbunden sein, daß die Reste R" und die sie verbindenden Atome des Cyclopentadienylringes ein C₄-C₂₄-Ringsystem bilden, welches seinerseits substituiert sein kann,
l gleich 4 ist,
m gleich 4 ist,
L¹ gleich oder verschieden sind und ein Wasserstoffatom, ein Halogenatom, oder OR^{y}, SR^{y}, OSiR^{y}₃, SiR^{y}₃, PR^{y}₂ oder NR^{y}₂ bedeuten, worin R^{y} ein Halogenatom, eine C₁-C₁₀-Alkylgruppe, eine halogenierte C₁-C₁₀-Akylgruppe, eine C₆-C₂₀-Arylgruppe oder eine halogenierte C₆-C₂₀-Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
o eine ganze Zahl von 1 bis 4 ist,
Z ein verbrückendes Strukturelement zwischen den beiden Cyclopentadienylringen bezeichnet und
v ist 1,
und mindestens eine Organometallverbindung der Formel III 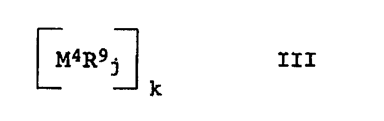 worin
M⁴ ein Element der I., II. und III. Hauptgruppe des Periodensystems der Elemente ist und die Reste R⁹ gleich oder verschieden sind und ein Wasserstoffatom, ein Halogenatom, eine C₁ -C₄₀-Kohlenwasserstoff-Gruppe bedeuten und j eine ganze Zahl von 1 bis 3 und k eine ganze Zahl von 1 bis 4 ist, **dadurch gekennzeichnet, daß** die Metallocen-Verbindung (IV) eine chirale, verbrückte Mono- oder Bis-Indenylverbindung ist, worin der Indenylring substituiert ist,
wobei die Organometallverbindung der Formel II kovalent an den Träger gebunden ist.

2. Verwendung eines geträgerten Katalysatoraystems gemäß Anspruch 1 zur Herstellung eines Olefinpolymers.

3. Verfahren zur Herstellung eines Olefinpolymers in Gegenwart eines geträgerten Katalysatorsystems gemäß Anspruch 1.

## Claims

1. A supported catalyst system obtainable by
a) reacting a Lewis base of the formula I,
M²R³R⁴R⁵ (I)
where R³, R⁴ and R⁵ are identical or different and are each a hydrogen atom, a halogen atom, a C₁-C₂₀-alkyl, C₆-C₄₀-aryl, C₇-C₄₀-alkylaryl or C₇-C₄₀-arylalkyl group and/or two radicals or all three radicals R³, R⁴ and R⁵ are connected to one another via C₂-C₂₀ units, and M² is an element of main group V of the Periodic Table of the Elements, and an organometallic compound of the formula II
M³R⁶R⁷R⁸ (II)
where
M³ is an element of main group III of the Periodic Table of the Elements and
R⁶, R⁷ and R⁸ are identical or different and are each a hydrogen atom, a halogen atom or a halogen-containing C₁-C₄₀ group, where at least one of the radicals R⁶, R⁷ and R⁸ is a halogen-containing C₁-C₄₀ group, with a support, and
b) subsequently reacting the product with a solution or suspension comprising a metallocene compound of the formula IV 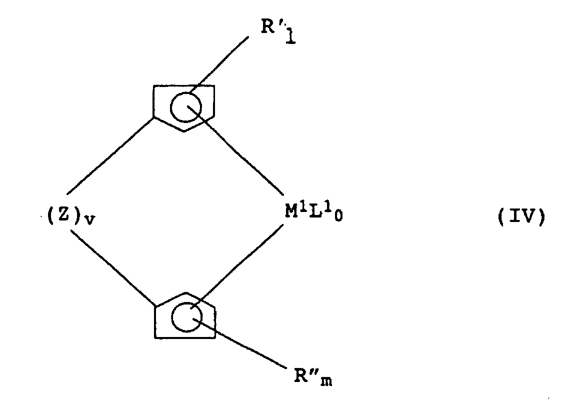
where
M¹ is a metal of transition group III, IV, V or VI of the Periodic Table of the Elements,
R' are identical or different and are each a hydrogen atom or SiR^{x}₃, where R^{x} are identical or different and are each a hydrogen atom or a C₁-C₄₀ group, or R' is a C₁-C₃₀ group or two or more radicals R' may be connected to one another so that the radicals R' and the atoms of the cyclopentadienyl ring which connect them form a C₄-C₂₄ ring system which may in turn be substituted,
R" are identical or different and are each a hydrogen atom or SiR^{X}₃, where R^{X} are identical or different and are each a hydrogen atom or a C₁-C₄₀ group, or R" is a C₁-C₃₀ group or two or more radicals R" may be connected to one another so that the radicals R" and the atoms of the cyclopentadienyl ring which connect them form a C₄-C₂₄ ring system which may in turn be substituted,
1 is 4,
m is 4,
L¹ are identical or different and are each a hydrogen atom, a halogen atom or OR^{y}, SR^{y}, OSiR^{y}₃, SiR^{y}₃, PR^{y}₂ or NR^{y}₂, where R^{y} is a halogen atom, a C₁-C₁₀-alkyl group, a halogenated C₁-C₁₀-alkyl group, a C₆-C₂₀-aryl group or a halogenated C₆-C₂₀-aryl group, or L¹ is a toluenesulfonyl, trifluoroacetyl, trifluoroacetoxyl, trifluoromethanesulfonyl, nonafluorobutanesulfonyl or 2,2,2-trifluoroethanesulfonyl group,
o is an integer from 1 to 4,
Z is a bridging structural element between the two cyclopentadienyl rings and
v is 1,
and at least one organometallic compound of the formula III 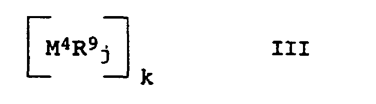 where
M⁴ is an element of main group I, II or III of the Periodic Table of the Elements and the radicals R⁹ are identical or different and are each a hydrogen atom, a halogen atom, a C₁-C₄₀-hydrocarbon group and j is an integer from 1 to 3 and k is an integer from 1 to 4, wherein the metallocene compound (IV) is a chiral, bridged monoindenyl or bisindenyl compound in which the indenyl ring is substituted,
the organometallic compound of the formula II being covalently bound to the support.

2. The use of a supported catalyst system as claimed in claim 1 for preparing an olefin polymer.

3. A process for preparing an olefin polymer in the presence of a supported catalyst system as claimed in claim 1.

## Revendications

1. Système de catalyseur supporté, pouvant être obtenu au moyen
a) de la réaction d'une base de Lewis de formule I :
M²R³R⁴R⁵ (I),
dans laquelle
R³, R⁴ et R⁵ sont identiques ou différents et représentent un atome d'hydrogène, un atome d'halogène, un groupe alkyle en C₁ à C₂₀, aryle en C₆ à C₄₀, alkylaryle en C₇ à C₄₀ ou arylalkyle en C₇ à C₄₀, et/ou deux groupes ou les trois groupes R³, R⁴ et R⁵ sont liés les uns aux autres par l'intermédiaire de motifs de carbone en C₂ à C₂₀, et M² représente un élément du groupe principal V de la Classification Périodique des Eléments, et d'un composé organométallique de formule II :
M³R⁶R⁷R⁸ (II)
dans laquelle
M³ représente un élément du groupe principal III de la Classification Périodique des Eléments, et
R⁶, R⁷ et R⁸ sont identiques ou différents et représentent un atome d'hydrogène, un atome d'halogène ou un groupe halogéné en C₁ à C₄₀, au moins un des groupes R⁶, R⁷ et R⁸ représentant un groupe halogéné en C₁ à C₄₀, avec un support et
b) de la réaction ultérieure avec une solution ou une suspension contenant un composé métallocène de formule IV : 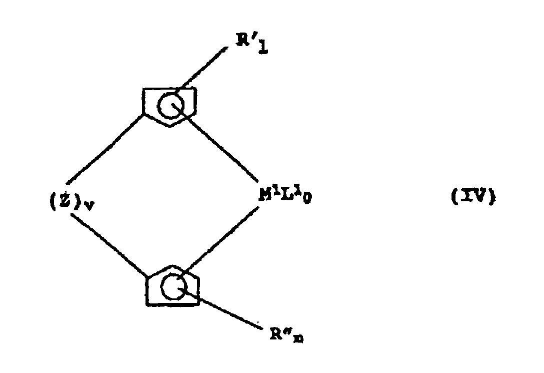
dans laquelle
M¹ représente un métal du sous-groupe III, IV, V ou VI de la Classification Périodique des Eléments,
R' sont identiques ou différents et représentent un atome d'hydrogène ou un groupe SiR^{x}₃, dans lequel R^{x} sont identiques ou différents et représentent un atome d'hydrogène ou un groupe carboné en C₁ à C₄₀, ou R' représentent un groupe carboné en C₁ à C₃₀ ou bien deux groupes R' ou plus peuvent être liés les uns aux autres de manière à ce que les groupes R' et les atomes du cycle cyclopentadiényle qui les lient forment un système cyclique en C₄ à C₂₄, qui, de son côté, peut être substitué,
R" sont identiques ou différents et représentent un atome d'hydrogène ou un groupe SiR^{x}₃, dans lequel R^{x} sont identiques ou différents et représentent un atome d'hydrogène ou un groupe carboné en C₁ à C₄₀, ou R'' représentent un groupe carboné en C₁ à C₃₀ ou bien deux groupes R'' ou plus peuvent être liés les uns aux autres de manière à ce que les groupes R' ' et les atomes du cycle cyclopentadiényle qui les lient forment un système cyclique en C₄ à C₂₄, qui, de son côté, peut être substitué quant à lui,
l vaut 4,
m vaut 4,
L¹ sont identiques ou différents et représentent un atome d'hydrogène, un atome d'halogène ou OR^{Y}, SR^{Y}, OSiR^{Y}3, SiR^{Y}₃, PR^{Y}₂ ou NR^{Y}₂, où R^{Y} représente un atome d'halogène, un groupe alkyle en C₁ à C₁₀, alkyle en C₁ à C₁₀ halogéné, aryle en C₆ à C₂₀ ou aryle en C₆ à C₂₀ halogéné, ou bien L¹ représentent un groupe toluènesulfonyle, trifluoroacétyle, trifluoroacétoxyle, trifluorométhanesulfonyle, nonafluoro-butanesulfonyle ou 2,2,2-trifluoroéthanesulfonyle,
o est un nombre entier de 1 à 4,
z désigne un élément structurel pontant entre les deux cycles cyclopentadiènyle et
v vaut 1,
et d'au moins un des composés organométalliques de formule III 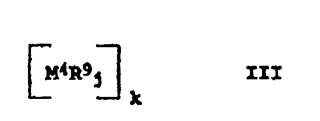 dans laquelle
M⁴ est un élément du groupe principal I, II ou III de la Classification Périodique des Eléments, et les groupes R⁹ sont identiques ou différents et représentent un atome d'hydrogène, un atome d'halogène, un groupe carboné en C₁ à C₄₀, et j représente un nombre entier de 1 à 3, et k représente un nombre entier de 1 à 4,
**caractérisé en ce que** le composé métallocène (IV) est un composé mono- ou de bis-indényle chiral, ponté, dans lequel le cycle indényle est substitué, le composé organométallique de formule II étant lié de manière covalente au support.

2. Utilisation d'un système de catalyseur supporté selon la revendication 1 pour la préparation d'un polymère d'oléfine.

3. Procédé de préparation d'un polymère d'oléfine en présence d'un système de catalyseur supporté selon la revendication 1.
